Europäisches Patentamt

European Patent Office

Office européen des brevets

(19)

(11) Numéro de publication: **0 292 376 B1**

## (12) FASCICULE DE BREVET EUROPEEN

(45) Date de publication de fascicule du brevet: **16.12.92**  (51) Int. Cl.⁵: **H04N 3/12**

(21) Numéro de dépôt: **88401190.9**

(22) Date de dépôt: **17.05.88**

(54) **Dispositif d'affichage électroluminescent à effet mémoire et à demi-teintes.**

(30) Priorité: **18.05.87 FR 8706914**

(43) Date de publication de la demande:
**23.11.88 Bulletin 88/47**

(45) Mention de la délivrance du brevet:
**16.12.92 Bulletin 92/51**

(84) Etats contractants désignés:
**DE GB NL**

(56) Documents cités:
**EP-A- 0 203 005**
**FR-A- 2 382 065**

(73) Titulaire: **FRANCE TELECOM**
**6, Place d'Alleray**
**F-75015 Paris(FR)**

(72) Inventeur: **Brunel, Christian**
**54 rue Hoche**
**F-78800 Houille(FR)**
Inventeur: **Thioulouse, Pascal**
**19 rue Nelaton**
**F-75015 Paris(FR)**

(74) Mandataire: **Mongrédien, André et al**
**c/o BREVATOME 25, rue de Ponthieu**
**F-75008 Paris(FR)**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition (art. 99(1) Convention sur le brevet européen).

**Description**

La présente invention a pour objet un dispositif d'affichage électroluminescent à effet mémoire. Elle trouve une application dans l'affichage alphanumérique, graphique ou autre, en particulier lorsqu'il s'agit d'afficher des demi-teintes.

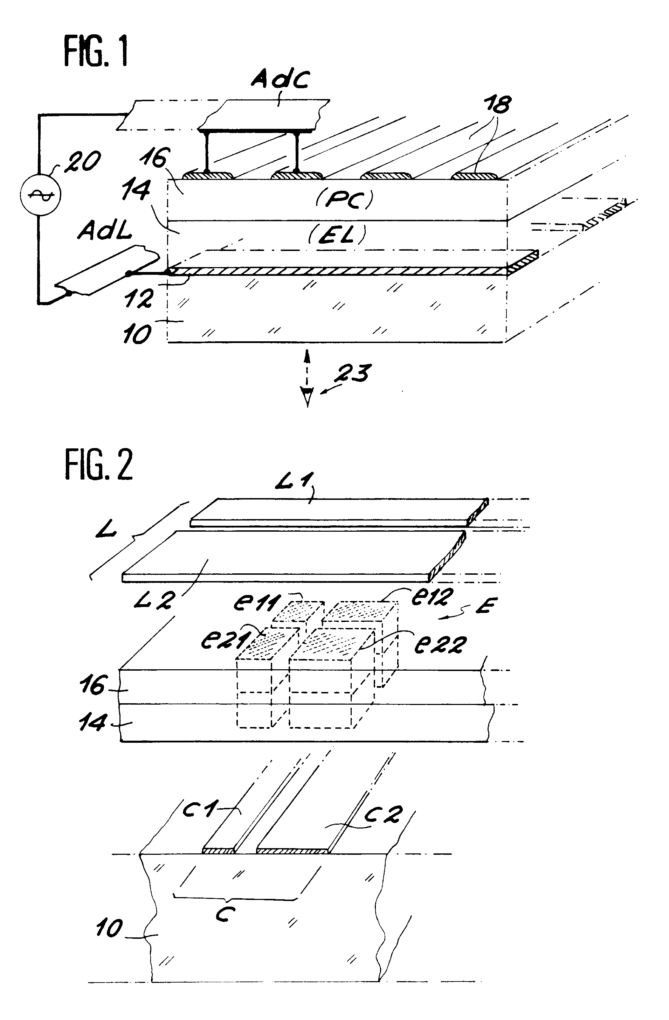

Un afficheur électroluminescent à effet mémoire peut être obtenu en utilisant une couche électroluminescente recouverte d'une couche photoconductrice. Un tel dispositif est connu dans son principe. La demande de brevet français FR-A-2 574 972 et l'article de P. Thioulouse et al intitulé "Monolithic Thin Film Photoconductor ACEL Structure with Extinsic Memory by Optical Coupling" publié dans IEEE Trans. Electron Devices, décrivent un tel afficheur. Il est illustré schématiquement sur la figure 1 annexée.

Un tel afficheur comprend un substrat transparent 10, des électrodes transparentes en ligne 12 (la coupe représentée est supposée être effectuée le long d'une de ces lignes), une couche électroluminescente 14, une couche photoconductrice 16 et des électrodes en colonnes 18. Le dispositif comprend encore un générateur de tension alternative 20. Par ailleurs, les électrodes en lignes 12 sont reliées à ce générateur 20 par l'intermédiaire d'un circuit d'adressage ligne AdL et les électrodes en colonnes 18 à ce même générateur par un circuit d'adressage colonne AdC. L'observation s'effectue à travers le substrat 10 de préférence en 23.

Le fonctionnement de ce dispositif est le suivant. Une tension V est appliquée entre les électrodes qui encadrent un point d'affichage appelé encore "eldim". La luminescence n'apparaît pas, tant que cette tension n'a pas atteint une valeur V1 correspondant à un certain seuil de champ électrique nécessaire à l'obtention du phénomène d'électroluminescence. A partir de cette valeur, le point excité émet de la lumière. La partie du rayonnement lumineux émise par la couche 14 vers l'arrière atteint le photoconducteur 16 qui, d'isolant qu'il était, devient conducteur. La quasi-totalité de la tension est alors appliquée à la couche électroluminescente 14 et le champ électrique appliqué à cette couche augmente brusquement. La tension appliquée peut donc être réduite sans que cesse l'électroluminescence. Celle-ci ne disparaîtra que lorsque le champ sera retombé en dessous de la valeur de seuil, ce qui correspond à une tension V2 inférieure à V1.

Si la tension appliquée aux électrodes est égale à une valeur V3 comprise entre V1 et V2, l'affichage sera maintenu. C'est le générateur 20 qui délivre cette tension dite tension d'entretien. Elle est appliquée en permanence aux électrodes. Le rôle des circuits d'adressage AdL et AdC est d'apporter, pendant un temps court, au point que l'on veut exciter, un surcroît de tension, d'amplitude égale à V1-V3.

Pour éteindre un point allumé, il suffit d'appliquer une impulsion d'effacement qui ramène, pendant un court instant, la tension en-dessous de V2.

Le générateur 20 peut être un générateur de tension sinusoïdale. Mais des générateurs de signaux rectangulaires ou d'impulsions conviennent également.

Des afficheurs électroluminescents à effet mémoire peuvent également être obtenus à l'aide de matériaux présentant un effet mémoire inhérent.

Le problème que se propose de résoudre la présente invention est l'affichage de demi-teintes avec de tels écrans.

Ce problème a déjà trouvé certaines solutions dans le cas où le matériau ne présente pas d'effet mémoire. On peut d'abord rappeler ces solutions et souligner leurs inconvénients, et examiner ensuite si ces solutions peuvent convenir aux afficheurs à effet mémoire.

La luminance d'un eldim électroluminescent dépend de trois paramètres :
- l'amplitude de la tension de commande,
- la fréquence de cette tension,
- la surface de l'eldim.

Par la suite, le terme "luminance" se rapportera systématiquement à des valeurs moyennées spatialement sur la surface affectée à l'eldim (Sa). Celle-ci inclut la surface émissive (Se) et les espaces inter-électrodes. Donc, si $L_p$ est la luminance pontuelle du transducteur, la luminance de l'eldim (L) sera :

$$L = \frac{L_p \times Se}{Sa}.$$

La luminance de l'eldim dépend donc également de la surface émissive (Se).

On connaît trois méthodes d'obtention de demi-teintes pour un écran électroluminescent sans mémoire. Elles exploitent chacune l'un de ces trois paramètres :

1) Action sur la tension

2

Selon cette technique on agit sur la tension appliquée à l'eldim et l'on commande ainsi la luminance de chaque eldim.

Les inconvénients de cette technique sont les suivants :

- nécessité de disposer de circuits spécifiques mélangeant les technologies numériques et analogiques,
- difficulté d'obtenir une bonne homogénéité de la luminance sur la surface de l'écran,

Une telle technique est décrite par Gielow et al dans "Monolithic Driver Chips for Matrixed Gray-Shaded TFEL Displays" SID 81 Digest pp 24-25.

2) Action sur la fréquenc

Cette technique est basée sur le fait que la luminance d'un matériau électroluminescent est à peu près proportionnelle à la fréquence d'excitation. On peut donc envisager une méthode d'adressage dans laquelle la fréquence d'excitation des eldims dépend de l'intensité de la luminance que l'on veut produire. Cependant, la conception et la mise en oeuvre d'une méthode de commande permettant de commuter des signaux de fréquences différentes d'un eldim à l'autre sont très complexes. Dans la pratique, la façon d'opérer est différente, puisqu'on réalise une modulation séquentielle de l'excitation : l'écran est commandé à une fréquence trame (F) déterminée mais chaque trame de durée T = 1/F est divisée en n sous-trames de durée T/n pendant lesquelles chaque eldim peut être allumé ou éteint. L'intégration de la lumière émise pendant une trame permet d'obtenir ainsi n niveaux de gris en progression linéaire.

Les inconvénients de cette technique sont les suivants :

- augmentation de la consommation électrique, du fait de la fréquence d'excitation élevée (nF) ;
- risque de papillotement pour les demi-teintes de plus faible niveau qui correspondent aux fréquences de répétition les plus basses,
- et par suite limitation du nombre de demi-teintes réalisables.

Une telle technique est décrite par Barrow et al dans "Multicolor TFEL Display and Exerciser" SID 86 Digest pp 25-28.

3) Action sur la surface de l'eldim

Cette technique consiste à décomposer spatialement chaque eldim en plusieurs sous-eldims et à exciter séparément ces sous-eldims. Pour constituer ces sous-eldims on utilise des électrodes lignes formées de plusieurs sous-lignes (par exemple n) et des électrodes colonnes formées, elles aussi, de plusieurs sous-colonnes (par exemple m). Chaque eldim défini par le recouvrement d'une ligne et d'une colonne est alors formé de n x m sous-eldims. Une telle technique est décrite par exemple dans le document FR-A- 2 580 848. L'allumage sélectionné de certains sous-eldims permet, par intégration spatiale de la luminance, de reconstituer plusieurs demi-teintes.

Les inconvénients de cette technique sont :

- augmentation de la résolution de l'écran comme la racine carrée du nombre de demi-teintes,
- limitation du nombre de demi-teintes réalisables (n x m demi-teintes réparties linéairement pour une matrice de n x m sous-eldims),
- augmentation de la fréquence de balayage ligne à cause du nombre de lignes accru d'un facteur n pour un même nombre d'eldims.

Une variante de cette méthode, décrite également dans le document précédent, consiste à utiliser plusieurs matériaux aux caractéristiques électro-optiques différentes. Par ailleurs, les sous-eldims peuvent avoir des surfaces différentes. On peut ainsi réaliser des progressions de niveaux non plus seulement linéaires mais géométriques ou autres.

Cette variante permet un gain en résolution, en fréquence de balayage ligne et en nombre de demi-teintes réalisables. Elle présente cependant un inconvénient qui est la complexité accrue de l'écran et corrélativement la complexité accrue du procédé de réalisation (plusieurs étapes de gravure).

En ce qui concerne maintenant les écrans électroluminescents à effet mémoire, les méthodes précédentes peuvent s'adapter de la manière suivante :

1) Action sur la tension

Cette méthode nécessite, de la part du matériau électroluminescent, une caractéristique dite de multistabilité, ce qui signifie que le matériau doit posséder plusieurs états stables dans le cycle d'hystérésis. La luminance à l'état allumé dépend ainsi du niveau de l'impulsion d'écriture. Les inconvénients restent les mêmes que pour les écrans sans mémoire, à savoir :

- la nécessité de disposer de circuits spécifiques mélangeant les technologies numérique et analogique,
- tolérances plus strictes sur l'homogénéité de luminance sur la surface de l'écran,

2) Action sur la fréquence

Cette méthode reste applicable et on retrouve une partie des inconvénients du cas sans mémoire, à savoir
- risque de papillotement pour les demi-teintes de plus faibles niveaux correspondant aux fréquences de répétition les plus basses,
- et par suite limitation du nombre de demi-teintes réalisables,
- en outre, cette méthode réduit le temps d'accès ligne d'un facteur n, ce qui constitue une contrainte supplémentaire sur le temps de commutation du transducteur à effet mémoire.

3) Action sur la surface de l'eldim

Cette méthode peut également convenir mais les inconvénients qui lui sont propres subsistent.

Dans le cas des afficheurs à photoconducteurs dits (PCEL), on ne dispose pas, du moins dans l'état actuel des connaissances, de propriétés de multistabilité. On ne peut donc pas retenir la première méthode utilisant la modulation de la tension pour réaliser des demi-teintes. En revanche, les autres méthodes sont applicables mais on ne tire pas le meilleur parti des possibilités offertes par ces afficheurs.

Pour les afficheurs à effet mémoire inhérent, on dispose bien d'une multistabilité et on peut donc utiliser la première méthode. Cependant, il est nécessaire de contrôler très finement la tension de commutation, car la variation de tension entre les niveaux extrêmes est voisine de 1 volt. La méthode d'action sur la tension, pour réaliser des demi-teintes, est donc peu praticable avec de tels afficheurs. Pour les autres techniques de réalisation de demi-teintes, il n'y a pas de différences entre les afficheurs à effet mémoire inhérents et les afficheurs à photoconducteur.

La présente invention a pour objet un écran d'affichage électroluminescent à effet mémoire qui combine deux des techniques précédemment évoquées en évitant leurs inconvénients. L'invention reprend tout d'abord la disposition consistant à décomposer chaque eldim en sous-eldims, grâce à l'emploi de sous-électrodes. L'invention combine ensuite cette technique avec celle de la commande par la fréquence, en ce sens que les sous-électrodes sont excitées par des tensions d'entretien de fréquences différentes ; mais, à la différence de la technique traditionnelle d'action sur la fréquence, il ne s'agit pas d'une commutation de fréquences (qui conduit aux inconvénients soulignés plus haut) mais d'une application permanente de signaux de fréquences différentes sur des sous-électrodes différentes.

On obtient ainsi, en quelque sorte, plusieurs sous-écrans imbriqués les uns dans les autres, chaque sous-écran travaillant à une fréquence d'entretien déterminée.

La réalisation d'un tel écran perfectionné ne complique pas le procédé de réalisation puisqu'elle fait appel à la technique connue de réalisation de sous-électrodes ; le circuit de commande de l'ensemble se trouve modifié en ce sens qu'il doit comporter plusieurs sources d'entretien de fréquences différentes avec les connexions appropriées aux sous-électrodes. Mais, comme ces tensions ne sont pas commutées par les circuits de commande, il n'y a pas là de difficulté particulière de réalisation.

Ainsi, selon l'invention, le nombre de demi-teintes est augmenté sans augmentation sensible de la complexité du dispositif.

De façon plus précise, la présente invention a pour objet un dispositif d'affichage électroluminescent à effet mémoire et à demi-teintes comprenant :
- un écran matriciel constitué d'une première famille d'électrodes en lignes, croisée avec une seconde famille d'électrodes en colonnes, un matériau électroluminescent étant intercalé entre les deux familles d'électrodes, l'écran comportant ainsi autant d'eldims que de points de recouvrement des électrodes,
- un circuit de commande de l'écran comprenant une source de tension alternative d'entretien, appliquée en permanence aux électrodes, un ensemble de circuits d'adressage ligne et un ensemble de circuits d'adressage colonne, ces deux ensembles de circuits d'adressage étant aptes à superposer une impulsion de tension à la tension d'entretien sur un jeu d'électrodes ligne-colonne pour allumer l'eldim correspondant.
- au moins une des familles d'électrodes étant divisée en plusieurs sous-électrodes, chaque eldim étant ainsi composé de plusieurs sous-eldims. La luminance d'un eldim résulte ainsi de la somme des luminances des sous-eldims qui le composent ;

4

ce dispositif étant caractérisé par le fait que :

- la source de tension d'entretien est composée d'autant de sources travaillant à des fréquences différentes qu'il y a de sous-électrodes dans l'une des familles d'électrodes, chacune de ces sources étant reliée en permance à ces différentes sous-électrodes, la luminance d'un sous-eldim dépendant ainsi à la fois de sa surface, laquelle est définie par les dimensions des sous-électrodes qui définissent le sous-eldim et de la fréquence d'entretien qui lui est appliquée, les dimensions et les fréquences étant choisies pour que les luminances des divers sous-eldims d'un eldim soient toutes différentes, l'affichage d'une demi-teinte pour un eldim étant obtenue par une combinaison appropriée des luminances des sous-eldims qui le composent.

De toute façon, les caractéristiques de l'invention apparaitront mieux après la description qui va suivre, d'exemples de réalisation donnés à titre explicatif et nullement limitatif. Cette description se réfère à des dessins annexés sur lesquels :

- la figure 1, déjà décrite, représente un écran d'affichage électroluminescent à photoconducteur,
- la figure 2 montre la décomposition des lignes d'électrodes en sous-lignes, des colonnes d'électrodes en sous-colonnes et des eldims en sous-eldims,
- la figure 3 est un schéma montrant la répartition des luminances ponctuelles des quatre sous-eldims composant un eldim,
- la figure 4 montre un ensemble écran-circuit de commande,
- la figure 5 représente des signaux de commande d'un écran.

Le dispositif représenté sur la figure 2 comprend des électrodes lignes, dont une seule est représentée sous la référence L, et des électrodes-colonnes dont une seule est représentée sous la référence C. L'électrode L est décomposée en deux sous-électrodes, l'une étroite L1 et l'autre plus large L2. De même, l'électrode C est décomposée en deux sous-électrodes, l'une étroite C1 et l'autre plus large C2.

Un eldim E, défini par le recouvrement de L et de C, est ainsi formé de quatre sous-eldims référencés respectivement e11, e12, e21 et e22.

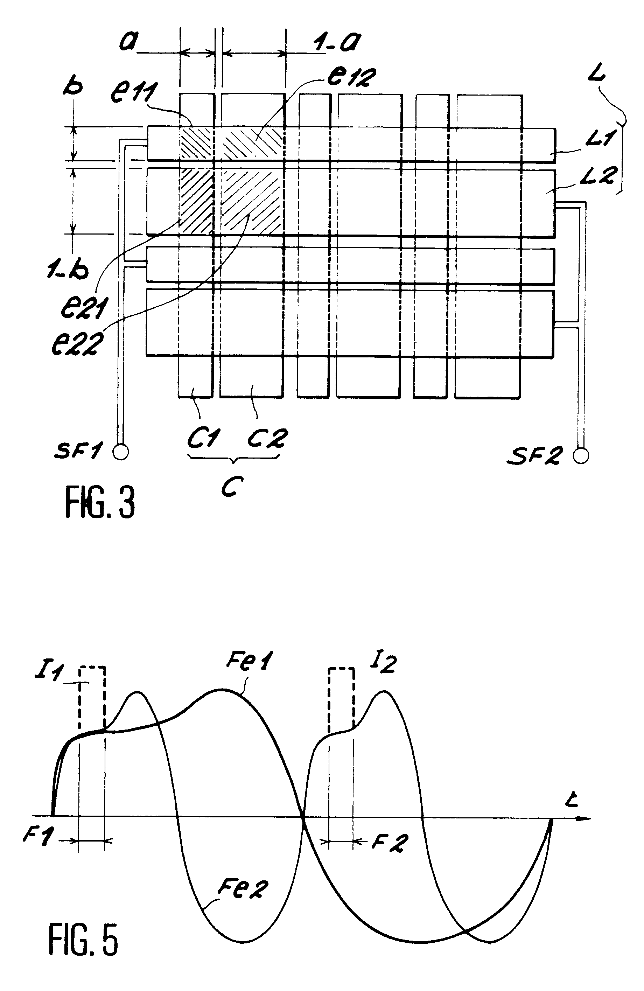

Comme on le voit mieux sur la figure 3, les sous-lignes de type L1 sont toutes reliées à une source de tension d'entretien SF1 de fréquence F1 et les sous-lignes de type L2 à une source de tension d'entretien SF2 de fréquence F2 supérieure à F1.

Si l'on note respectivement $b$ et $(1-b)$, les largeurs relatives respectives des sous-lignes L1 et L2 et $a$ et $(1-a)$ les largeurs relatives respectives des sous-colonnes C1 et C2, les surfaces des sous-eldims sont respectivement :

| | |
|---|---|
| e11 : ab | e12 : (1-a)b |
| e21 : (1-b)a | e22 : (1-a) (1-b) |

Si les fréquences F2 et F1 sont dans le rapport $c$ ($c = F2/F1$), les luminances (qui sont proportionnelles aux fréquences) seront dans les rapports suivants :

| | |
|---|---|
| e11 : ab | e12 : (1-a)b |
| e21 : (1-b)ac | e22 : (1-a) (1-b)c |

En prenant : $a = b = 1/3$ et $c = 2$, on a $(1-a) = (1-b) = 2/3$.

On obtient alors des luminances qui sont proportionnelles à respectivement :

| | |
|---|---|
| e11 : 1/9 | e12 : 2/9 |
| e21 : 4/9 | e22 : 8/9 |

Les quatre eldims e11, e12, e21, e22 ont donc des luminances en progression géométrique de raison 2.

On peut écrire ces luminances sous la forme :

1Lo, 2Lo, 4Lo et 8Lo.

On pourra ainsi afficher 16 demi-teintes en excitant judicieusement les sous-eldims, selon la correspondance suivante :

| Demi-teintes | Excitation des sous-eldims |
|---|---|
| 0 | tous les sous-eldims éteints |
| 1Lo | e11 allumé |
| 2Lo | e12 allumé |
| 3Lo | e11 et e12 allumés |
| 4Lo | e21 allumé |
| 5Lo | e21 et e11 allumés |
| etc. | etc. |
| 14Lo | e12, e21, e22 allumés |
| 15Lo | tous les sous-eldims allumés. |

Naturellement, on peut obtenir bien d'autres progressions en choisissant d'autres rapports dans les surfaces (en jouant sur a et b) ou un autre rapport pour les fréquences.

L'invention ne se limite pas au cas de deux sous-lignes, de deux sous-colonnes et de deux fréquences. On peut aussi utiliser n sous-lignes (avec n entier supérieur à 2) mais une colonne entière et n fréquences ; ou sous-lignes, n fréquences et m colonnes, etc.

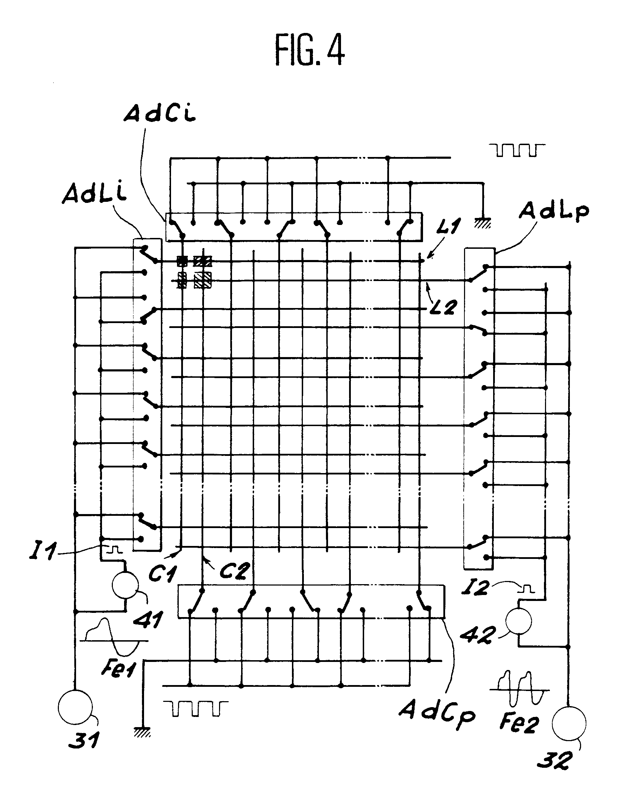

La figure 4 montre l'afficheur de l'invention avec son circuit de commande. L'afficheur est représenté dans sa variante à deux sous-lignes L1 et L2 et deux sous-colonnes C1, C2. Les sous-lignes L1 sont reliées à une source 31 de fréquence Fe1 et les sous-lignes L2 à une source 32 de fréquence Fe2. Par ailleurs, les sous-lignes impaires sont reliées à un circuit d'adressage ligne AdLi et les sous-lignes paires sont reliées à un circuit d'adressage ligne AdLp, les sous-colonnes impaires à un circuit d'adressage AdCi et les sous-colonnes paires à un circuit d'adressage colonne AdCp.

Des générateurs 41 et 42 émettent des impulsions qui viennent se superposer à la tension d'entretien. Chaque sous-ligne est reliée, soit directement à la source 31 ou 32, soit à travers le générateur 41 ou 42. Sur la figure 4, on a supposé que la sous-ligne impaire de la ligne de rang 2 et la sous-ligne paire de cette même ligne de rang 2 étaient excitées, toutes les autres sous-lignes ne recevant que les tensions d'entretien.

On voit, sur cette figure, que les sources 31 et 32 ne sont pas commutées selon les demi-teintes à afficher. Elles sont connectées en permanence aux électrodes-lignes.

Pour ce qui est des circuits d'adressage, ils délivrent des impulsions qui vont déclencher l'effet électroluminescent comme exposé plus haut. La figure 5 montre un exemple non-limitatif de la forme des signaux que l'on pourra utiliser. On y voit deux signaux d'entretien aux fréquences Fe1 et Fe2 (dans la variante illustrée Fe2 = 2Fe1) et les impulsions I1 et I2 qui se superposent à l'une ou l'autre des tensions d'entretien.

Pour éviter des déclenchements intempestifs, on préfère donner à chaque tension d'entretien une forme qui n'est pas purement sinusoïdale, mais qui présente un palier. C'est dans une fenêtre temporelle correspondant à ce palier qu'on appliquera la tension d'excitation. Ces fenêtres sont représentées sur la figure 5 par F1 pour la fréquence Fe1 et par F2 pour la fréquence Fe2.

**Revendications**

1. Dispositif d'affichage électroluminescent à effet mémoire et à demi-teintes comprenant :
   - un écran matriciel constitué d'une première famille d'électrodes en lignes (12), croisée avec une seconde famille d'électrodes en colonnes (18), un matériau électroluminescent (14, 16) étant intercalé entre les deux familles d'électrodes, l'écran comportant ainsi autant d'eldims (E) que de points de recouvrement des électrodes,
   - un circuit de commande de l'écran comprenant une source de tension alternative d'entretien (20), appliquée en permanence aux électrodes, un ensemble de circuits d'adressage lignes (AdL) et un ensemble de circuits d'adressage colonnes (AdC), ces deux circuits d'adressage étant aptes à superposer une impulsion de tension à la tension d'entretien sur un jeu d'électrodes ligne-colonne pour allumer l'eldim correspondant,

- au moins une des familles d'électrodes (L, C) étant divisée en plusieurs sous-électrodes (L1, L2, C1, C2), chaque eldim (E) étant ainsi composé de plusieurs sous-eldims,
- la luminance moyennée spatialement d'un eldim résultant ainsi de la somme des luminances des sous-eldims qui le composent,

ce dispositif étant caractérisé par le fait que :

- la source de tension d'entretien est composée d'autant de sources (31, 32) travaillant à des fréquences différentes (Fe1, Fe2) qu'il y a de sous-électrodes (L1, L2) dans l'une des familles d'électrodes (L), chacune de ces sources étant reliée en permanence à ces différentes sous-électrodes (L1, L2),
- la luminance moyennée spatialement d'un sous-eldim dépendant ainsi à la fois de sa surface, laquelle est définie par les dimensions des sous-électrodes et de la fréquence d'entretien qui lui est appliquée, les dimensions et les fréquences étant choisies pour que les luminances des divers sous-eldims d'un eldim soient toutes différentes, l'affichage d'une demi-teinte pour un eldim étant obtenu par une combinaison appropriée des luminances des sous-eldims qui le composent.

2. Dispositif d'affichage selon la revendication 1, caractérisé par le fait que :

- chaque électrode ligne (L) est composée d'une première sous-électrode ligne (L1) et d'une seconde sous-électrode ligne (L2), ces deux sous-électrodes lignes ayant des largeurs (b, 1-b) différentes,
- la source de tension d'entretien comprend une première source (31) et une seconde source (32) de fréquences différentes (Fe1, Fe2), la première (31) étant reliée à toutes les premières sous-électrodes lignes (L1) et la seconde (32) à toutes les secondes sous-électrodes lignes (L2).

3. Dispositif d'affichage selon la revendication 2, caractérisé par le fait que :

- chaque électrode colonne (C) est composée d'une première sous-électrode colonne (C1) et d'une seconde sous-électrode colonne (C2), ces deux sous-électrodes colonnes (C1, C2) ayant des largeurs différentes (a, 1-a).

4. Dispositif d'affichage selon la revendication 3, caractérisé par le fait que :

- la première sous-électrode ligne (L1) a une largeur moitié de la seconde sous-électrode ligne (L2),
- la première sous-électrode colonne (C1) a une largeur moitié de la seconde sous-électrode colonne C2),
- la fréquence (Fe1) de la première source de tension d'entretien est la moitié de la fréquence (Fe2) de la seconde source,
- chaque eldim étant ainsi composé de quatre sous-eldims dont les luminances peuvent prendre 4 valeurs formant une suite géométrique de raison 2, le dispositif étant ainsi capable d'afficher 16 demi-teintes différentes correspondant aux 16 combinaisons possibles des 4 luminances des 4 sous-eldims.

**Claims**

1. Electroluminescent display with a memory effect and half-tones comprising:

a matrix screen constituted by a first group of row electrodes (12) intersecting with a second group of column electrodes (18), an electroluminescent material (14,16) being placed between the two groups of electrodes, the screen thus having the same number of eldims (E) as there are overlap points of the electrodes;

a screen control circuit having an a.c. holding voltage source (20), which is permanently applied to the electrodes, a group of row addressing circuits (AdL) and a group of column addressing circuits (AdC), said two addressing circuits being able to superimpose a voltage pulse on the holding voltage on a set of row-column electrodes in order to illuminate the corresponding eldim;

at least one of the groups of electrodes (L,C) being subdivided into several subelectrodes (L1,L2,C1,C2), each eldim (E) thus being constituted by several subeldims;

the spatially averaged luminance of an eldim consequently resulting from the sum of the luminances of the subeldims corresponding thereto;

7

said display being characterized in that:
the holding voltage source comprises the same number of sources (31,32) operating at different frequencies (Fe1,Fe2) as there are subelectrodes (L1,L2) in one of the groups of electrodes (L), each of these sources being permanently connected to said different subelectrodes (L1,L2);
the spatially averaged luminance of a subeldim thus being dependent both on its surface, which is defined by the dimensions of the subelectrodes and the holding frequency which is applied thereto, the dimensions and the frequencies being chosen in such a way that the luminances of the different subeldims of an eldim are all different, the display of a half-tone for an eldim being obtained by an appropriate combination of the luminances of the subeldims forming the same.

2. Display according to claim 1, characterized in that each row electrode (L) is constituted by a first row subelectrode (L1) and a second row subelectrode (L2), said two row subelectrodes having different widths (b, 1-b) and the holding voltage source comprises a first source (31) and a second source (32) of different frequencies (Fe1,Fe2), the first (31) being connected to all the first row subelectrodes (L1) and the second (32) to all the second row subelectrodes (L2).

3. Display according to claim 2, characterized in that each column electrode (C) comprises a first column subelectrode (C1) and a second column subelectrode (C2), said two column subelectrodes (C1,C2) having different widths (a, 1-a).

4. Display according to claim 3, characterized in that the first row subelectrode (L1) has half the width of the second row subelectrode (L2), the first column subelectrode (C1) has half the width of the second column subelectrode (C2), the frequency (Fe1) of the first holding voltage source is half the frequency (Fe2) of the second source and each eldim is thus constituted by four subeldims, whereof the luminances can assume four values forming a geometrical sequence with a ratio 2, the display thus being able to display 16 different half-tones corresponding to the 16 possible combinations of the four luminances of the four subeldims.

## Patentansprüche

1. Elektrolumineszenzanzeigevorrichtung mit Speichereffekt und Halbtönen, enthaltend
   - einen Matrixbildschirm, bestehend aus einer ersten Reihe zeilenweise angeordneter Elektroden (12), die sich mit einer zweiten Reihe spaltenweise angeordneter Elektroden (18) kreuzt, wobei ein elektrolumineszierendes Material (14, 16) zwischen den beiden Elektrodenreihen angeordnet ist, so daß der Bildschirm so viele Anzeigezellen (E) enthält, wie es Punkte gibt, in denen sich die Elektroden überdecken,
   - einen Schaltkreis zur Ansteuerung des Bildschirms, der eine Quelle für eine Haltewechselspannung enthält (20), die ununterbrochen an die Elektroden angelegt wird, eine Anordnung von Schaltkreisen zur Adressierung der Zeilen (AdL) und eine Anordnung zur Adressierung der Spalten, die in der Lage sind, bei einem Paar von Zeilen- und Spaltenelektroden der Haltespannung einen Spannungsimpuls zu überlagern, um die entsprechende Anzeigezelle einzuschalten,
   - wobei mindestens eine der Elektrodenreihen (L, C) in mehrere Teilelektroden (L1, L2, C1, C2) unterteilt ist, so daß jede Anzeigezelle aus mehreren Teilanzeigezellen besteht,
   - wodurch sich die räumlich gemittelte Leuchtstärke einer Anzeigezelle aus der Summe der Leuchtstärken der sie bildenden Teilanzeigezellen ergibt,
   Vorrichtung, dadurch gekennzeichnet, daß
   - die Haltespannungsquelle aus ebenso vielen, mit unterschiedlichen Frequenzen (Fe1, Fe2) arbeitenden Quellen (31, 32) besteht, wie es Teilelektroden (L1, L2) in einer der Elektrodenreihen (L) gibt, wobei jede dieser Quellen ununterbrochen mit diesen verschiedenen Teilelektroden (L1, L2) verbunden ist,
   - die räumlich gemittelte Leuchtstärke einer Teilanzeigezelle dadurch sowohl von ihrer Fläche abhängig ist, die durch die Abmessungen der Teilelektroden definiert wird, als auch von der Frequenz der an sie angelegten Haltespannung, wobei Abmessungen und Frequenzen derart gewählt sind, daß alle Leuchtstärken der verschiedenen Teilanzeigezellen einer Anzeigezelle verschieden sind, wobei die Anzeige eines Halbtones an einer Anzeigezelle durch geeignete Kombination der Leuchtstärken der sie bildenden Teilanzeigezellen erhalten wird.

2. Anzeigevorrichtung gemäß Patentanspruch 1, dadurch gekennzeichnet, daß

- jede Zeilenelektrode (L) aus einer ersten Zeilenteilelektrode (L1) und einer zweiten Zeilenteilelektrode (L2) besteht, wobei die beiden Zeilenteilelektroden unterschiedliche Breiten (b, 1-b) aufweisen,
- die Haltespannungsquelle eine erste Quelle (31) und eine zweite Quelle (32) unterschiedlicher Frequenz (Fe1, Fe2) enthält, wobei die erste (31) mit allen ersten Zeilenteilelektroden (L1) verbunden ist und die zweite (32) mit allen zweiten Zeilenteilelektroden (L2).

3. Anzeigevorrichtung gemäß Patentanspruch 2, dadurch gekennzeichnet, daß
- jede Spaltenelektrode (C) aus einer ersten Spaltenteilelektrode (C1) und einer zweiten Spaltenteilelektrode (C2) besteht, wobei diese beiden Spaltenteilelektroden (C1, C2) unterschiedliche Breiten (a, 1-a) aufweisen.

4. Anzeigevorrichtung gemäß Patentanspruch 3, dadurch gekennzeichnet, daß
- die Breite der ersten Zeilenunterelektrode (L1) halb so groß ist, wie die der zweiten Zeilenunterelektrode (L2),
- die Breite der ersten Spaltenunterelektrode (C1) halb so groß ist, wie die der zweiten Spaltenunterelektrode (C2),
- die Frequenz (Fe1) der ersten Haltespannungsquelle halb so groß ist, wie die Frequenz (Fe2) der zweiten Quelle,
- dadurch jede Anzeigezelle aus vier Teilanzeigezellen besteht, deren Leuchtstärke vier Beträge annehmen kann, die Glieder einer geometrischen Reihe mit Quotient 2 darstellen, wodurch die Vorrichtung in der Lage ist, 16 verschiedene Halbtöne entsprechend den 16 möglichen Kombinationen der 4 Leuchtstärken der 4 Teilanzeigezellen anzuzeigen.

9

# FIG. 1

AdC

18

20

16

14

(PC)

(EL)

AdL

12

10

23

# FIG. 2

L1

L

L2

e11

e12

E

e21

e22

16

14

C1

C2

C

10

FIG. 3

FIG. 5

11

# FIG. 4